(19) Europäisches Patentamt
European Patent Office
Office européen des brevets

(11) **EP 1 753 520 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(51) Int Cl.:
***B01D 46/24*** *(2006.01)*      ***F01N 3/022*** *(2006.01)*
***C04B 38/00*** *(2006.01)*

(21) Anmeldenummer: 05747671.5

(22) Anmeldetag: **25.05.2005**

(86) Internationale Anmeldenummer:
**PCT/EP2005/052389**

(87) Internationale Veröffentlichungsnummer:
**WO 2005/115589 (08.12.2005 Gazette 2005/49)**

(54) **REINIGUNGSEINSATZ FÜR ABGASREINIGUNGSANLAGEN, INSBESONDERE FÜR PARTIKELFILTER**

CLEANING INSERT FOR EXHAUST EMISSION CONTROL SYSTEMS IN PARTICULAR FOR PARTICLE FILTERS

PIECE RAPPORTEE DE NETTOYAGE POUR SYSTEMES DE PURIFICATION DES GAZ D'ECHAPPEMENT, EN PARTICULIER POUR FILTRES A PARTICULES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: 25.05.2004   DE 102004026060
18.08.2004   DE 202004013009 U

(43) Veröffentlichungstag der Anmeldung:
**21.02.2007 Patentblatt 2007/08**

(73) Patentinhaber: **ROBERT BOSCH GMBH**
**70442 Stuttgart (DE)**

(72) Erfinder: **FRAENKLE, Gerhard**
**76630 Remshalden (DE)**

(56) Entgegenhaltungen:
WO-A-20/04024293          DE-A1- 10 037 403
FR-A- 2 789 327          US-A- 427 607

**Beschreibung**

Die Erfindung betrifft einen Reinigungseinsatz für Abgasreinigungsanlagen, insbesondere für Partikel- bzw. Russfilter in Abgasreinigungsanlagen von Kraftfahrzeugmotoren, ferner eine Abgasreinigungsanlage, ein Partikelfilter und einen Katalysator mit einem Reinigungseinsatz nach der Gattung der Ansprüche 1, 16, 17 bzw. 18.

Reinigungseinsätze für Abgasreinigungsanlagen sind als keramische oder sintermetallische Einsätze von Katalysatoren und/oder Rußfiltern allgemein bekannt, und zwar mit im Querschnitt rechteckigen, in Durchströmungsrichtung verlaufenden Kanälen, deren Seiten jeweils gemeinsame Wände benachbarter Kanäle bilden, über die die Abgase bei Nutzung als Partikelfilter von den anströmseitig beaufschlagten Anströmkanälen auf die abströmseitigen Abströmkanäle übertritt. Je nach Einsatzzweck sind katalytische Beschichtungen vorgesehen, die den an sich schon hohen Aufwand für derartige Reinigungseinsätze weiter erhöhen.

Für Partikelfilter, insbesondere Rußfilter, der eingangs genannten Art sind keramische Filterkörper mit wechselseitig geschlossenem anströmseitigen und abströmseitigen Kanälen aus der US 4 276 071 bekannt. Die anströmseitigen Kanäle sind mit regelmäßigen oder lang gestrecktem, sechseckigem Querschnitt und die ihrer Querschnittsfläche wesentlich kleineren abströmseitigen Kanäle mit dreieckigem Querschnitt ausgebildet, wobei je drei anströmseitige Kanäle mit sechseckigem Querschnitt einen abströmseitigen Kanal mit dreieckigem Querschnitt umgrenzen, so dass bei einem derartigen Filterkörper jede der Kanalseiten des anströmseitigen Kanales mit sechseckigem Querschnitt eine Kanalseite eines abströmseitigen Kanales mit dreieckigem Querschnitt überdeckt, was zu einer starken Zerklüftung des abströmseitigen Gesamtquerschnittes führt und, bezogen auf die Größenverhältnisse zwischen anströmseitigen und abströmseitigen Kanälen für die Fertigung sowie auch unter funktionalen Gesichtspunkten unbefriedigend ist.

Für Katalysatoren ist es aus der DE 696 22 616 T2 bekannt, diese mit einem wabenförmigen Katalysatorkörper auszubilden, der elektrisch geheizt ist und dessen in Durchströmungsrichtung durchlaufende Kanäle Wände aus elektrisch leitendem Material aufweisen. Als Wickelkörper ausgeführt ist der Katalysatorkörper mit gleich gerichtet zu den Kanälen verlaufenden und sich über die Länge des Katalysatorkörpers sowie quer zu den Kanälen erstreckenden Spalträumen versehen. Die Spalträume sind jeweils zwischen Kanalfronten verlaufend, von Kanälen umgrenzt und über die Spalträume soll die Verteilung der Heizleistung sowie die Wärmeverteilung im Katalysatorkörper beeinflusst werden. In Verbindung damit sollen die mechanischen Materialbeanspruchungen, insbesondere auch Spannungen innerhalb des Filterkörpers reduziert werden. Den im Querschnitt über den Kanalkörper längs durchlaufenden Kanälen sechseckigen Querschnittes sind abgrenzend gegen die Spalträume, teilweise auch den jeweiligen Spaltraum überbrückend, Versteifungsstrukturen zugeordnet. Eine derartige Versteifungsstruktur ist, die Abgrenzung zum Spaltraum bildend, durch Kanäle rhombischen Querschnittes gebildet, die konturfolgend angrenzend zum Spaltraum liegen, die Kanäle sechseckigen Querschnittes überdecken und quasi eine den Spaltraum begrenzende Auskleidung bilden, die endseitig in eine Begrenzung des Spaltraumes durch Kanäle sechseckigen Querschnittes einläuft.

Aus der DE 42 00 552 A1 ist für Rußfilter als Reinigungseinsatz ein wabenförmiger Filterkörper bekannt, der in Durchströmungsrichtung verlaufende Kanäle aufweist, die als wechselseitig geschlossene, anströmseitige und abströmseitige Kanäle jeweils bei gleicher Querschnittsfläche sechseckförmigen Querschnitt aufweisen. Die anströmseitigen und die abströmseitigen Kanäle schließen jeweils, quasi in Reihe angeordnet, über diametral einander gegenüberliegende Kanalwände aneinander an, und die Reihen der an- und abströmseitigen Kanäle liegen zueinander konturfolgend gegeneinander verzahnt aneinander an, so dass sich ein Filterkörper bildet, der sich quer zu der Strömungsrichtung über die ganze Fläche als aus an- und abströmseitigen Kanälen zusammengesetzt darstellt. Dieser Aufbau des Filterkörpers soll sicherstellen, dass über den Querschnitt des Filterkörpers wie auch über die Länge der Kanäle unterschiedliche Rußablagerungen und ungleiche Verbrennungsabläufe mit entsprechend unterschiedlicher Temperaturverteilung im Filterkörper nicht zu diesen zerstörenden Verspannungen führen.

Eine Wabenstruktur mit Waben lang gestreckten sechseckigen Querschnittes ist unter anderem für katalytische Filterkörper bekannt, die in chemischen Produktionsanlagen Einsatz finden (US 3 502 596).

Bekannt sind weiter Keramikkörper mit Wabenstruktur, die Kanäle mit achteckigem und Kanäle mit viereckigem Querschnitt aufweisen (DE 29 17 773 A1).

Der Erfindung liegt die Aufgabe zugrunde, Reinigungseinsätze der eingangs genannten Art im Hinblick auf verringertem Materialbedarf und möglichst große zur Verfügung stehende nutzbare Reinigungsflächen bei im Hinblick auf das Aschevolumen optimierten Querschnittsverhältnissen von anströmseitigen und abströmseitigen Kanälen auszugestalten.

Erreicht wird dies **erfindungs**gemäß durch einen viereckförmigen Querschnitt für die abströmseitigen Kanäle, wodurch sich eine Struktur realisieren lässt, die unter fertigungstechnischen Gesichtspunkten, Gesichtspunkten des Materialbedarfes sowie auch zur Realisierung günstiger Flächenverhältnisse zwischen anströmseitigen und abströmseitigen Kanalquerschnitten vorteilhaft ist. **Dabei sind** die anströmseitigen sechseckförmigen Kanäle, **beispielsweise** bei gestrecktem Kanalquerschnitt, so in Gruppen zusammengefasst, dass je vier anströmseitige Kanäle einen abströmseitigen Kanal mit viereckförmigen Querschnitt umgrenzen.

Reinigungseinsätze der vorbesprochenen Art eignen sich insbesondere für Partikelfilter mit wechselseitig geschlossenen Kanälen. Für Reinigungseinsätze mit Filterfunktion, so insbesondere für als Russfilter eingesetzte Reinigungseinsätze, erweisen sich insbesondere Lösungen als zweckmässig, deren Kanäle Querschnittsflächen unterschiedlicher Grösse aufweisen, so Kanäle mit sechseckigem und viereckigem Querschnitt, wobei bevorzugt die Kanäle sechseckigen Querschnitts eine größere Querschnittsfläche aufweisen als die Kanäle mit viereckigem Querschnitt. Eine solche Ausgestaltung ermöglicht bei ausreichender Standfestigkeit des Filterkörpers geringe Wanddicken, so Wanddicken bis in den Bereich von 0,1 bis 0,2 mm bei bezogen auf keramische Filter spezifischen Oberflächen von mehreren Quadratmetern pro Liter Keramik, wobei sich die spezifische Oberfläche von Quadratmeter/Liter als Funktion der Wanddicke darstellt und bei Wanddicken von 0,1 mm spezifische Oberflächen bis in den Bereich von 20 m²/l erreichbar sind. Selbst bei Wanddicken von 0,2 mm werden noch spezifische Oberflächen von etwa 10 m²/l Keramik erreicht, und dies bei einer Anzahl von Kanälen zwischen etwa 200 bis 400 Kanälen/Quadratinch.

Erfindungsgemäß schließen im Verbund die Kanäle sechsförmigen Querschnittes, bezogen auf ein Achsenkreuz mit senkrecht zueinander stehenden Achsen, in Richtung der Querschnittslängsachse mit ihren einander gegenüberliegenden Endbereichen bzw. Kanalspitzen, und in Richtung der hierzu senkrechten Achse mit zueinander und zur langen Querschnittslängsachse parallelen Kanalseiten aneinander an. Erfindungsgemäß wird von den einander zugewandten Seiten von jeweils vier sechseckförmigen Kanälen ein Kanal viereckförmigen Querschnittes begrenzt, wobei sich der Vorteil anström- und abströmseitig unterschiedlicher Kanalquerschnitte auch in Verbindung mit anströmseitigen Kanalquerschnitten in Form regelmäßiger Sechsecke erreichen lässt.

Durch die Bemessung der jeweiligen Querschnitte lässt sich bei einer derartigen Grundausgestaltung eine Optimierung des anströmseitigen Aschespeichervolumens und der Größe der Filterfläche zwischen Anström- und Abströmseite erreichen.

In nachstehenden, diesbezüglichen Festlegungen wird als Abstand C die Strecke zwischen den in Richtung der Querschnittslängsachse als erster Achse einander gegenüberliegenden Ecken eines Sechseckes bezeichnet und mit A die Länge der zur ersten Achse parallelen Seiten des Sechsecks. Der quer hierzu in Richtung einer zweiten Achse gemessene Abstand zwischen den parallel zur ersten Achse verlaufenden Seiten ist als Breite des Sechsecks mit B bezeichnet.

Ferner gilt für das Verhältnis V von Zuströmfläche $F_{Zuström}$ zu Abströmfläche $F_{Abtröm}$

$$V = F_{Zuström} / F_{Abström},$$

und es ist mit

$$Z = V_{Asche} / F_{Filter}$$

das Aschevolumen $V_{Asche}$ im Verhältnis zur Filterfläche $F_{Filter}$ in 1/m² definiert.

Als im Rahmen der Erfindung zweckmäßige Werte haben sich Flächenverhältnisse V von Zuströmfläche zu Abströmfläche

$$1,5 \leq V \leq 5$$

erwiesen, und zwar bei einem Längenverhältnis von

$$0,2 \leq A/C \leq 0,66,$$

wobei die jeweiligen mittleren Werte, insbesondere von 2,5 bis 3,5 bzw. insbesondere 0,35, bevorzugte Werte darstellen.

Ferner haben sich für das Verhältnis Z von Aschevolumen zur Filterfläche Werte

$$0,8 \leq Z \leq 1,2$$

als zweckmäßig erwiesen, und zwar bei einem Längenverhältnis von

$$1,0 \leq B/A \leq 4,0,$$

wobei auch hier die jeweiligen mittleren Werte von insbesondere 1 bzw. 2,5 bevorzugte Werte bilden.

Für die praktische Ausgestaltung erweist es sich als zweckmäßig, wenn die Kanäle sechseckigen Querschnittes einen gestreckten Kanalquerschnitt aufweisen, derart, dass die langen, zur Querschnittslängsachse parallelen Querschnittsseiten gemeinsame Wände benachbarter Kanäle mit sechseckigem Querschnitt bilden.

Erfindungsgemäß erweist es sich, dass jeweils zwei sechseckförmige Kanäle mit insbesondere gestrecktem Kanalquerschnitt mit fluchtenden Längsachsen der Kanäle, ein Kanalpaar bilden und dass die Kanäle zweier aneinander grenzender Kanalpaare mit parallel verlaufenden Längsachsen zu einer zu den Längsachsen senkrechten Symmetrieebene mit ihren jeweiligen, in der Symmetrieebene aneinander stoßenden, in die Kanalspitzen auslaufenden und einander zugewandten kurzen Querschnittsseiten einen Kanal viereckigen Querschnitts begrenzen.

In Abhängigkeit von der Streckung der Querschnitte der sechseckigen Kanäle kann der Querschnitt des viereckigen Kanales quadratisch oder rautenförmig gestaltet sein, wobei auch bei dieser Lösung alle Querschnittsseiten der Kanäle, von den umfangsseitig zum Einsatz liegenden Querschnittsseiten abgesehen, gemeinsame Wände aneinander grenzender Kanäle bilden, sodass sich ein dünnwandiger und Material sparender Aufbau ergibt, und dies verbunden mit der Möglichkeit, Fläche und Form der jeweiligen Kanalquerschnitte für die sechseckigen und die viereckigen Kanäle zu variieren, so dass sich an- und abströmseitige Kanäle mit unterschiedlichen Querschnittsformen und Flächen realisieren lassen. Bezogen auf Rußfilter bilden bevorzugt die sechseckigen Kanäle anströmseitige Kanäle.

Es werden in vorteilhafter Weise durch gemeinsame Wände gebildete Abgrenzungen zwischen aneinander grenzenden Kanälen mit geringen Wandstärken und Wandvolumina ermöglicht, so dass sich bei kleinen Wanddicken grosse Oberflächen realisieren lassen. Dies bei grossen spezifischen Oberflächen bezogen auf die Menge des für den Einsatz aufgewandten Materials, wobei als Material sowohl Keramik als auch metallische, offenporige Schäume oder anderweitige metallische Filterstrukturen Verwendung finden können.

Gemäß der Erfindung können erfindungsgemäße insbesondere als Partikelfilter eingesetzte Reinigungseinsätze auch aus vorgeformten Flachmaterialien zusammengesetzt werden, wobei, gezogen auf Kanäle sechseckigen Querschnittes, die die einander anschließenden Ecken der Sechsecke enthaltende Ebene eine Symmetrieebene bildet, in der die aus Flachmaterialien vorgeformten oberen und unteren Kanalhälften zusammengefügt sind, wobei derartig aus zusammengefügten vorgeformten Platinen gebildete Filterkanäle eine Filterebene bilden und ein Filter als Reinigungsansatz aus derartigen Filterebenen geschichtet aufgebaut werden kann, und zwar bei Überdeckung der zu den jeweiligen Symmetrieebenen parallelen Seiten der Sechsecke. Im Überdeckungsbereich können die Seitenwände zur Herstellung von Querverbindungen aufgebrochen sein und beispielsweise größere oder kleinere offene Durchtrittsflächen aufweisen, in deren Randbereich sich auch eine Verbindung aufeinander liegender Seitenwände mit Vorteil erreichen lässt. Weitere Einzelheiten und Merkmale der Erfindung ergeben sich aus den Ansprüchen. Ferner wird die Erfindung nachstehend anhand von Ausführungsbeispielen erläutert, wobei

Fig. 1 und 2     Darstellungen von Ausschnitten aus erfindungsgemäßen Reinigungseinsätzen zeigen, jeweils als Querschnittsdarstellung, wobei die Reinigungseinsätze aus Kanälen mit lang gestrecktem Sechseckquerschnitt und über diese abgegrenzten Kanälen mit viereckigem Querschnitt aufgebaut sind,

Fig. 3     eine nicht erfindungsgemäße Querschnittdarstellung für an- und abströmseitige Kanäle zeigt, welche an die Sechseck- und Viereckform angenähert, elliptischen und rhombischen Querschnitt aufweisen, und wobei

Fig. 4     im Querschnitt einen Ausschnitt aus einem bekannten Reinigungseinsatz zeigt, der aus Kanälen mit regelmäßigem Sechseckquerschnitt aufgebaut ist.

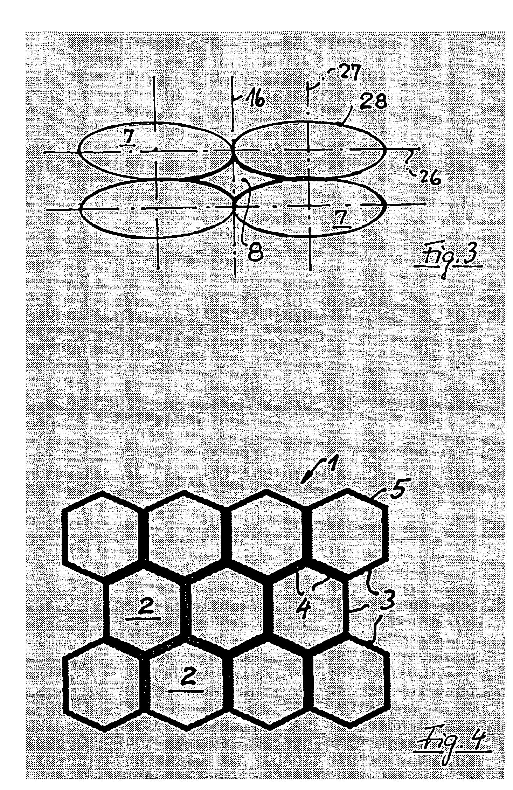

Fig. 4 zeigt einen Ausschnitt aus einem Reinigungseinsatz 1, wobei der Reinigungseinsatz 1 aus Kanälen 2 sechseckigen Querschnitts aufgebaut ist, deren Seiten 3 gleiche Längen aufweisen und im Verbund des Einsatzes mit ihren aneinander grenzenden Seiten 3 jeweils gemeinsame Wände 4 aneinander grenzender Kanäle 2 bilden. Die gemeinsamen Wände 4 sind hier zur Veranschaulichung verdickt dargestellt, können als gemeinsame Wände aber gleiche oder auch geringere Wandstärke als die randseitig frei liegenden Wände 5 aufweisen. Der dargestellte Sechseckquerschnitt der Kanäle 2 ermöglicht grundsätzlich einen geringen Materialeinsatz bei großen wandflächen, die, je nach Einsatzzweck und Materialstruktur, Filterflächen und, bei entsprechender Beschichtung, Reaktionsflächen bilden können, sodass sich Reinigungseinsätze gleicher Art insbesondere auch als Rußfilter eignen.

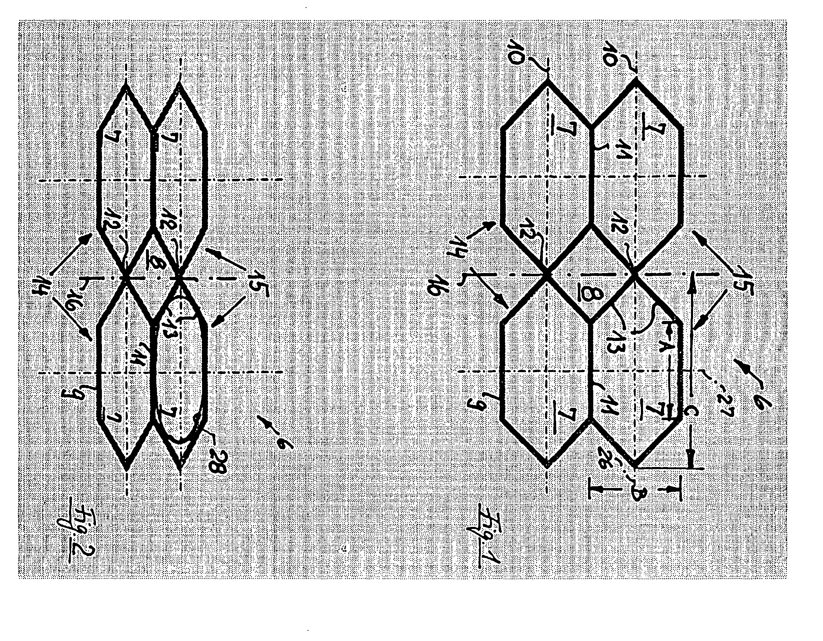

Die grundsätzlichen Vorteile des Aufbaus eines Reinigungseinsatzes 1 aus im Querschnitt regelmäßige Sechseckform aufweisenden Kanälen 2 lassen sich auch bei Reinigungseinsätzen 6 gemäß Fig. 1 und 2 erreichen, bei denen der Reinigungseinsatz 6 aus Kanälen 7 mit lang gestrecktem Sechseckquerschnitt und Kanälen 8 mit Viereckquerschnitt aufgebaut ist. Bezogen auf Fig. 1 und 2 finden hierbei gleiche Bezugszeichen Verwendung, und Fig. 1 und 2 unterscheiden sich im Wesentlichen lediglich hinsichtlich des Grades der Streckung des Querschnittes der Kanäle 7, und dadurch bedingt hinsichtlich der Querschnittsform der Kanäle 8 viereckigen Querschnitts, die in Fig. 1 im quadratischen und in Fig. 2 rhombischen Querschnitt aufweisen.

Der Aufbau des Reinigungseinsatzes 6 erfolgt mit einer Anordnung der Kanäle 7 sechseckigen Querschnittes derart, dass diese bezüglich ihrer langen, zu ihren Querschnittslängsachsen 10 parallelen Querschnittsseiten 9 - bei paralleler Lage der Querschnittslängsachsen 10 - gemeinsame Wände 11 für die über ihre langen Seiten aneinander grenzenden Kanäle 7 bilden, und dass paarweise bezüglich ihrer Querschnittslängsachsen 10 zueinander fluchtende Kanäle 7 mit ihren Kanalspitzen 12, in denen die jeweils aufeinander gerichteten kurzen Seiten 13 der Kanäle 7 auslaufen, aneinander stoßen. Die aneinander stoßenden Spitzen 12 zweier Kanalpaare 14, 15, die jeweils durch zwei Kanäle 7 mit fluchtender Querschnittslängsachse 10 gebildet sind und deren jeweilige Kanäle 7 fluchtend zu einer Symmetrieebene 16 liegen, die quer zu den Querschnittslängsachsen 10 durch die Kanalspitzen 12 verläuft, begrenzen mit ihren einander zugewandten, in den Spitzen 12 auslaufenden kurzen Seiten 13 jeweils einen Kanal 8 viereckigen Querschnitts, wobei die Seiten 13 gemeinsame Wände zu den umgrenzenden Kanälen 7 sechseckigen Querschnitts bilden.

Fig. 1 und 2 veranschaulichen, dass in Abhängigkeit von der Erstreckung der sechseckigen Kanäle 7 das Flächenverhältnis zwischen sechseckigen Kanälen 7 und viereckigen Kanälen 8 variiert werden kann, so dass sich auch das Verhältnis von Anströmzu Abströmquerschnitt variieren lässt. Damit bietet sich insbesondere die Möglichkeit, die anströmseitigen Kanäle im Querschnitt größer als die abströmseitigen Kanäle zu machen, so dass auch bei entsprechenden Ablagerungen eine Filterfunktion über eine hohe Nutzungsdauer sichergestellt werden kann. Insbesondere die sechseckigen Kanäle 7 werden als anströmseitige Kanäle genutzt, die endseitig geschlossen sind, während die dann abströmseitigen Kanäle 8 anströmseitig geschlossen sind.

Fig. 1 zeigt, beispielhaft für Sechsecke im Generellen, bezogen auf einen sechseckigen Kanal 7 mit gestrecktem Kanalquerschnitt ein Achsenkreuz mit senkrecht zueinander stehenden Achsen 26, 27 wobei die Achse 26 als Querschnittslängsachse die erste und die hierzu senkrechte Achse 27 eine zweite Achse bildet und wobei die in Richtung der ersten Achse 26 einander gegenüberliegenden Ecken als Kanalspitzen in der Verbindung zum bezogen auf die Symmetrieebene 16 jeweils nächstfolgenden Kanal 7 liegen. Der Abstand zwischen den längs der ersten Achse 26 einander gegenüberliegenden Ecken ist mit C bezeichnet. Die in Richtung der zweiten Achse einander gegenüberliegenden Seiten, in Fig. i als Wände 11 bezeichnet, weisen einen Abstand B zueinander auf. Mit A ist die Länge dieser Seiten bezeichnet.

Bezüglich der entsprechenden Abmessungen gelten im Rahmen der erfindungsgemäßen Lösung die Verhältnisse

$$0,2 \leq A/C \leq 0,66,$$

und $1,0 \leq B/A \leq 4$, wobei mittlere Werte bevorzugte Werte bilden, um optimale Verhältnisse von Zuström- und Abströmfläche sowie von Aschevolumen zu Filterfläche zu erhalten.

Hierbei korrespondiert zum Längenverhältnis A/C ein Verhältnis V der Zuströmfläche $F_{zuström}$ zur Abströmfläche $F_{Abström}$ mit $1,5 \leq V \leq 5$, wobei auch hier der mittlere Wert einen bevorzugen Wert bildet.

Zum Längenverhältnis B/A korrespondiert ein Verhältnis Z von Aschevolumen $V_{Asche}$ zu Filterfläche $V_{Filter}$ in $1/m^2$, bezüglich dessen gilt $0,8 \leq Z \leq 1,2$, wobei wiederum der mittlere Wert einen bevorzugten Wert bildet.

In Fig. 2 ist mit der schematisch in einem Kanal 7 sechseckigen Querschnitts eingezeichneten Ellipse 28 veranschaulicht, dass es im Rahmen der Erfindung liegt, auch Kanäle 7 mit ungefähr sechseckförmigem Querschnitt vorzusehen, so etwa in den Ecken abgerundete Kanäle. Auch hierbei ergeben sich durch die Kanäle 7 eingeschlossene Kanäle 8 viereckförmigen Querschnitts.

Eine solche Ausgestaltung kann insbesondere bei einem Grundaufbau aus verhältnismäßig flachen, lang gestreckten Kanälen 7 von Vorteil sein, und sie bietet die Möglichkeit, Einfluss auf die jeweilige nutzbare Filterfläche zu nehmen und seitens von als Anströmkanälen 7 verwendeten Kanälen sechseckigen Querschnittes in den Sechseckspitzen auslaufende Querschnittsbereiche aufgrund der elliptischen Verrundungen zu vermeiden, die in Bezug auf Ablagerungen kritisch sein können. Gleichzeitig ist eine Verringerung der für die Filterung nicht nutzbaren Anlagenflächen zwischen den Kanälen längs der in Richtung der langen Achse verlaufenden Seiten erreichbar.

Figur 3 zeigt, lediglich zu Illustrationszwecken und über den Gegenstand der Erfindung hinausgehend, statt sechseckförmiger bzw. ungefähr sechseckförmiger Kanäle, Kanäle elliptischen Querschnitts.

**Patentansprüche**

1.  Reinigungseinsatz für Abgasreinigungsanlagen, insbesondere für Partikel bzw. Rußfilter in Abgasreinigungsanlagen von Kraftfahrzeugmotoren, mit in Durchströmungsrichtung verlaufenden, wechselseitig geschlossenen Kanälen (7, 8), die einen mehrkkigen Querschnitt aufweisen und deren Seiten jeweils gemeinsame Wände benachbarter Kanäle bilden, wobei die anströmseitigen Kanäle (7) einen sechseckförmigen Querschnitt aufweisen, **dadurch gekennzeichnet, dass** die abströmseitigen Kanäle (8) einen viereckförmigen Querschnitt aufweisen, wobei die zu einer Querschnittslängsachse (10, 26) parallelen Seiten der sechseckförmigen Kanäle (7) gemeinsame Wände (11) benachbarter Kanäle (7) mit sechseckförmigem Querschnitt bilden, von denen je vier einen Kanal (8) mit viereckförmigem Querschnitt umgrenzen, wobei jeweils zwei anströmseitige, aneinander grenzende Kanäle (7) mit sechseckförmigem Querschnitt mit in Flucht liegenden Querschnittslängsachsen (10) ein Kanalpaar bilden und wobei die sechseckförmigen Kanäle (7) zweier aneinander grenzender Kanalpaare (14,15) mit parallel verlaufenden Querschnittslängsachsen (10) eine symmetrische Anordnung ihrer Kanäle (7) zu einer zu den Querschnittslängsachsen (10) senkrechten Symmetrieebene (16) aufweisen und mit ihren jeweiligen, in der Symmetrieebene (16) aneinander stoßenden, in Kanalspitzen (12) auslaufenden und einander zugewandten Querschnittsseiten (13) den Kanal (8) viereckförmigen Querschnittes begrenzen.

2. Reinigungseinsatz nach Anspruch 1, **dadurch gekennzeichnet, dass** die anströmseitigen Kanäle (7) im Querschnitt größer sind als die abströmseitigen Kanäle (8).

3. Reinigungseinsatz nach Anspruch 1 oder 2, **dadurch gekennzeichnet, dass** die sechseckförmigen Kanäle (7) im Querschnitt als Sechsecke mit gleich- oder ungleichlangen Seiten ausgebildet sind.

4. Reinigungseinsatz nach Anspruch 1, 2 oder 3, **dadurch gekennzeichnet, dass** die anströmseitigen, sechseckförmigen Kanäle (7) einen gestreckten Kanalquerschnitt aufweisen.

5. Reinigungseinsatz nach Anspruch 4, **dadurch gekennzeichnet, dass** die die gemeinsamen Wände (11) bildenden Seiten die langen Seiten der sechseckförmigen Kanäle sind.

6. Reinigungseinsatz nach einem der vorhergehenden Ansprüche, **dadurch gekennzeichnet, dass** die viereckförmigen Kanäle (8) im Querschnitt als Rhomben gestaltet sind.

7. Reinigungseinsatz nach Anspruch 1, **dadurch gekennzeichnet, dass** die viereckförmigen, abströmseitigen Kanäle (8) als Romben mit konkav eingewölbten Seiten ausgebildet sind.

8. Reinigungseinsatz nach einem der vorhergehenden Ansprüche,
**dadurch gekennzeichnet, dass**, bezogen auf sechseckförmige, anströmseitige Kanäle (7) das Verhältnis der Länge A der zur Querschnittslängsachse (10) parallelen Kanalseiten zum Abstand C zwischen den auf der Querschnittslängsachse (10) einander gegenüberliegenden Kanalspitzen (12) bei $0{,}2 \leq A: C \leq 0{,}66$ liegt.

9. Reinigungseinsatz nach Anspruch 8, **dadurch gekennzeichnet, dass** das Verhältnis der Länge A zum Abstand C bei 0,35 liegt.

10. Reinigungseinsatz nach einem der vorhergehenden Ansprüche,
**dadurch gekennzeichnet, dass**, bezogen auf die sechseckförmigen, anströmseitigen Kanäle (7) das Verhältnis des senkrecht zur Querschnittslängsachse (10) gemessenen Abstandes zwischen den zur Querschnittslängsachse (10) parallelen Kanalseiten als Breite B eines sechseckförmigen Kanales (7) zur Länge A der zur Querschnittslängsachse (10) parallelen Kanalseiten bei $1{,}0 \leq B: A \leq 4{,}0$ liegt.

11. Reinigungseinsatz nach Anspruch 9, **dadurch gekennzeichnet, dass** das Verhältnis der Breite B zur Länge A bei 2,5 liegt.

12. Reinigungseinsatz nach einem der vorhergehenden Ansprüche, **dadurch gekennzeichnet, dass** das Verhältnis V der über den Querschnitt der sechseckförmigen anströmseitigen Kanäle (7) bestimmten Zuströmfläche $F_{zuström}$ zur über den Querschnitt der viereckförmigen, abströmseitigen Kanäle (8) bestimmten Abströmfläche $F_{abström}$ bei $1{,}5 \leq V \leq 5$ liegt

13. Reinigungseinsatz nach Anspruch 12, **dadurch gekennzeichnet, dass** das Verhältnis (V) der Zuströmfläche $F_{zuström}$ zur Abströmfläche $F_{abström}$ bei $2{,}5 \leq V \leq 3{,}5$ liegt

14. Reinigungseinsatz nach einem der vorhergehenden Ansprüche,
**dadurch gekennzeichnet, dass** der Einsatz (6) mit den jeweiligen Kanälen (7, 8) aus keramischem Material besteht

15. Reinigungseinsatz nach einem der Ansprüche 1 bis 13,
**dadurch gekennzeichnet, dass** der Einsatz (6) mit den jeweiligen Kanälen (7, 8) aus metallischem Material besteht.

16. Partikelfilter mit einem Reinigungseinsatz nach einem der vorhergehenden Ansprüche.

17. Katalysator mit einem Reinigungseinsatz nach einem der Ansprüche 1 bis 15.

18. Abgasreinigungsanlage, insbesondere enthaltend einen Katalysator oder ein Partikelfilter, mit einem Reinigungseinsatz nach einem der Ansprüche 1 bis 15.

## Claims

1. Purification insert for exhaust-gas purification systems, in particular for particle or soot filters in exhaust-gas purification systems of motor vehicle engines, having alternately closed ducts (7, 8) which run in the throughflow direction and which have a polygonal cross section and whose sides in each case form common walls of adjacent ducts, with the inflow-side ducts (7) having a hexagonal cross section, **characterized in that** the outflow-side ducts (8) have a tetragonal cross section, with those sides of the hexagonal ducts (7) which are parallel to a cross section longitudinal axis (10, 26) forming common walls (11) of adjacent ducts (7) with hexagonal cross section, every four of which hexagonal ducts (7) border a duct (8) with a tetragonal cross section, with in each case two inflow-side ducts (7) of hexagonal cross section which adjoin one another and have aligned cross section longitudinal axes (10) forming a duct pair, and with the hexagonal ducts (7) of two adjacent duct pairs (14, 15) with cross section longitudinal axes (10) which run parallel to one another having a symmetrical arrangement of their ducts (7) with respect to a symmetrical plane (16) which is perpendicular to the cross section longitudinal axes (10), and delimiting, by means of their respective cross-sectional sides (13) which abut against one another in the plane of symmetry (16), which taper to duct points (12) and which face one another, the duct (8) of tetragonal cross section.

2. Purification insert according to Claim 1, **characterized in that** the inflow-side ducts (7) are larger in cross section than the outflow-side duct (8).

3. Purification insert according to Claim 1 or 2, **characterized in that** the hexagonal ducts (7) are formed, in cross section, as hexagons with sides of equal length or of unequal length.

4. Purification insert according to Claim 1, 2 or 3, **characterized in that** the inflow-side hexagonal ducts (7) have an elongate duct cross section.

5. Purification insert according to Claim 4, **characterized in that** the sides which form the common walls (11) are the long sides of the hexagonal ducts.

6. Purification insert according to one of the preceding claims, **characterized in that** the tetragonal ducts (8) are designed in cross section as rhombuses.

7. Purification insert according to Claim 1, **characterized in that** the tetragonal outflow-side ducts (8) are embodied as rhombuses with concavely inwardly arched sides.

8. Purification insert according to one of the preceding claims, **characterized in that**, with regard to hexagonal, inflow-side ducts (7), the ratio of the length A of the duct sides which are parallel to the cross section longitudinal axis (10) to the spacing C between the mutually opposite duct tips (12) on the cross section longitudinal axis (10) is in the range $0.2 \leq A : C \leq 0.66$.

9. Purification insert according to Claim 8, **characterized in that** the ratio of the length A to the spacing C is 0.35.

10. Purification insert according to one of the preceding claims, **characterized in that**, with regard to the hexagonal, inflow-side ducts (7), the ratio of the spacing, measured perpendicularly with respect to the cross section longitudinal axis (10), between the duct sides which are parallel to the cross section longitudinal axis (10), as a width B of a hexagonal duct (7), to the length A of the duct sides which are parallel to the cross section longitudinal axis (10) is in the range $1.0 \leq B : A \leq 4.0$.

11. Purification insert according to Claim 9, **characterized in that** the ratio of the width B to the length A is 2.5.

12. Purification insert according to one of the preceding claims, **characterized in that** the ratio V of the inflow surface area $F_{inflow}$ over the cross section of the hexagonal inflow-side ducts (7) to the outflow surface area $F_{outflow}$ over the cross section of the tetragonal, outflow-side ducts (8) is in the range $1.5 \leq V \leq 5$.

13. Purification insert according to Claim 12, **characterized in that** the ratio (V) of the inflow surface area $F_{inflow}$ to the outflow surface area $F_{outflow}$ is in the range $2.5 \leq V \leq 3.5$.

14. Purification insert according to one of the preceding claims, **characterized in that** the insert (6) with the respective ducts (7, 8) is composed of ceramic material.

15. Purification insert according to one of Claims 1 to 13, **characterized in that** the insert (6) with the respective ducts (7, 8) is composed of metallic material.

16. Particle filter having a purification insert according to one of the preceding claims.

17. Catalytic converter having a purification insert according to one of Claims 1 to 15.

18. Exhaust-gas purification system, in particular comprising a catalytic converter or a particle filter, having a purification insert according to one of Claims 1 to 15.

## Revendications

1. Pièce rapportée de nettoyage pour installations de purification de gaz d'échappement, en particulier pour des filtres à particules ou à suie dans des installations de purification de gaz d'échappement de moteurs de véhicules automobiles, comprenant des canaux (7, 8) fermés en alternance, s'étendant dans la direction de l'écoulement, qui présentent une section transversale polygonale et dont les côtés forment à chaque fois des parois communes de canaux adjacents, les canaux (7) du côté de l'afflux présentant une section transversale hexagonale, **caracté-**

risée en ce que les canaux (8) du côté de la sortie présentent une section transversale quadrilatérale, les côtés parallèles à un axe longitudinal (10, 26) de la section transversale des canaux hexagonaux (7) formant des parois communes (11) de canaux adjacents (7) de section transversale hexagonale, dont à chaque fois quatre délimitent un canal (8) ayant une section transversale quadrilatérale, deux canaux adjacents (7) du côté de l'afflux, ayant une section transversale hexagonale, formant avec les axes longitudinaux (10) de leur section transversale en alignement une paire de canaux et les canaux hexagonaux (7) de deux paires de canaux adjacentes (14, 15), avec des axes longitudinaux (10) de leurs sections transversales s'étendant parallèlement, formant un agencement symétrique de leurs canaux (7) par rapport à un plan de symétrie (16) perpendiculaire aux axes longitudinaux (10) de leurs sections transversales, et limitant avec leurs côtés en section transversale (13) respectifs, en butée l'un contre l'autre dans le plan de symétrie (16), tournés l'un vers l'autre et se terminant par des pointes de canaux (12), le canal (8) de section transversale quadrilatérale.

2. Pièce rapportée de nettoyage selon la revendication 1, **caractérisée en ce que** les canaux (7) du côté de l'afflux ont une section transversale plus grande que les canaux (8) du côté de la sortie.

3. Pièce rapportée de nettoyage selon la revendication 1 ou 2, **caractérisée en ce que** les canaux hexagonaux (7) sont réalisés en section transversale sous forme de polygones de mêmes côtés ou de côtés de longueurs différentes.

4. Pièce rapportée de nettoyage selon la revendication 1, 2 ou 3, **caractérisée en ce que** les canaux hexagonaux (7) du côté de l'afflux présente une section transversale de canal allongée.

5. Pièce rapportée de nettoyage selon la revendication 4, **caractérisée en ce que** les côtés formant les parois communes (11) sont les côtés longs des canaux hexagonaux.

6. Pièce rapportée de nettoyage selon l'une quelconque des revendications précédentes, **caractérisée en ce que** les canaux quadrilatéraux (8) du côté de la sortie sont configurés en section transversale sous forme rhombiforme.

7. Pièce rapportée de nettoyage selon la revendication 1, **caractérisée en ce que** les canaux quadrilatéraux (8) du côté de la sortie sont réalisés sous forme de rhombes avec des côtés incurvés concaves.

8. Pièce rapportée de nettoyage selon l'une quelconque des revendications précédentes, **caractérisée en ce que**, par rapport aux canaux hexagonaux (7) du côté de l'afflux, le rapport de la longueur A des côtés de canaux parallèles à l'axe longitudinal (10) de leurs sections transversales, par rapport à la distance C entre les pointes de canaux (12) opposées sur l'axe longitudinal (10) de leurs sections transversales est $0,2 \leq A:C \leq 0,66$.

9. Pièce rapportée de nettoyage selon la revendication 8, **caractérisée en ce que** le rapport de la longueur A à la distance C est de 0,35.

10. Pièce rapportée de nettoyage selon l'une quelconque des revendications précédentes, **caractérisée en ce que**, par rapport aux canaux hexagonaux (7) du côté de l'afflux, le rapport de la distance mesurée perpendiculairement à l'axe longitudinal de leurs sections transversales (10) entre les côtés de canaux parallèles à l'axe longitudinal de leurs sections transversales (10), en tant que largeur B d'un canal (7) hexagonal, à la longueur A des côtés de canaux parallèles à l'axe longitudinal (10) de leurs sections transversales, est de $1,0 \leq B:A \leq 4,0$.

11. Pièce rapportée de nettoyage selon la revendication 9, **caractérisée en ce que** le rapport de la largeur B à la longueur A est de 2,5.

12. Pièce rapportée de nettoyage selon l'une quelconque des revendications précédentes, **caractérisée en ce que** le rapport V de la surface d'afflux $F_{afflux}$ définie sur la section transversale des canaux hexagonaux (7) du côté de l'afflux, à la surface de sortie $F_{sortie}$ définie sur la section transversale des canaux quadrilatéraux (8) du côté de la sortie, est de $1,5 \leq V \leq 5$.

13. Pièce rapportée de nettoyage selon la revendication 12, **caractérisée en ce que** le rapport (V) de la surface d'afflux $F_{afflux}$ à la surface de sortie $F_{sortie}$ est de $2,5 \leq V \leq 3,5$.

14. Pièce rapportée de nettoyage selon l'une quelconque des revendications précédentes, **caractérisée en ce que** la pièce rapportée (6) avec les canaux respectifs (7, 8) se compose de matériau céramique.

15. Pièce rapportée de nettoyage selon l'une quelconque des revendications 1 à 13, **caractérisée en ce que** la pièce rapportée (6) avec les canaux respectifs (7, 8) se compose de matériau métallique.

16. Filtre à particules comprenant une pièce rapportée de nettoyage selon l'une quelconque des revendications précédentes.

17. Catalyseur comprenant une pièce rapportée de nettoyage selon l'une quelconque des revendications 1 à 15.

18. Installation de purification des gaz d'échappement, comprenant en particulier un catalyseur ou un filtre à particules, avec une pièce rapportée de nettoyage selon l'une quelconque des revendications 1 à 15.

Fig. 1

Fig. 2

_Fig. 3_

_Fig. 4_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4276071 A
- DE 69622616 T2
- DE 4200552 A1
- US 3502596 A
- DE 2917773 A1